(19) Europäisches Patentamt
European Patent Office
Office européen des brevets

(11) **EP 2 514 587 A1**

(12) **EUROPEAN PATENT APPLICATION**
published in accordance with Art. 153(4) EPC

(43) Date of publication:
**24.10.2012 Bulletin 2012/43**

(51) Int Cl.:
**B32B 5/26** (2006.01)     **B29C 70/06** (2006.01)
**B32B 5/28** (2006.01)     **D06H 7/22** (2006.01)

(21) Application number: **10837466.1**

(22) Date of filing: **07.12.2010**

(86) International application number:
**PCT/JP2010/071863**

(87) International publication number:
**WO 2011/074437 (23.06.2011 Gazette 2011/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2009  JP 2009285882**

(71) Applicant: **Toray Industries, Inc.**
**Tokyo 103-8666 (JP)**

(72) Inventors:
• **YAMAMOTO Kohnosuke**
**Nagoya-shi**
**Aichi 455-8502 (JP)**

• **YAMASAKI Masaaki**
**Nagoya-shi**
**Aichi 455-8502 (JP)**
• **TAKEMOTO Hidehiro**
**Nagoya-shi**
**Aichi 455-8502 (JP)**

(74) Representative: **Hoefer & Partner**
**Pilgersheimer Straße 20**
**81543 München (DE)**

(54) **LAYERED CARBON-FIBER PRODUCT, PREFORM, AND PROCESSES FOR PRODUCING THESE**

(57)     Disclosed is a layered carbon-fiber product obtained by layering one or more sheets of carbon-fiber fabrics each prepared using one or more carbon-fiber bundles each comprising a plurality of carbon fibers arranged in a single direction. The layered carbon-fiber product is characterized in that at least a part of said surfaces and/or edge faces of said layered carbon-fiber product is constituted of a graphitized part and that said graphitized part exhibits a Raman spectrum in which said intensity ratio of said D band to said G band (D-band intensity/G-band intensity) is 0.3 or less. Also provided are a preform prepared using the layered carbon-fiber product and processes for producing the layered carbon-fiber product and the preform. The edge faces of the layered carbon-fiber product or preform can be easily processed, and it is possible to highly accurately trim the layered carbon-fiber product or preform while preventing the carbon fibers from fraying at the edge faces. Consequently, the layered carbon-fiber product and the preform can be easily and accurately disposed in a die and deburring can be omitted, making it possible to attain a cost reduction and a reduction in production time.

FIG. 3

**Description**

Technical Field of the Invention

The present invention relates to a layered carbon-fiber product and to a preform used for fiber reinforced plastics, or processes for producing these, and specifically relates to an improvement technology of the trimming the layered carbon-fiber product or the preform.

Background Art of the Invention

Recently, fiber reinforced plastics made with carbon fibers are getting more often used in order to achieve a weight reduction of airplanes and cars. Particularly, a fiber reinforced plastic which is made with carbon-fiber bundles consisting of a plurality of carbon fibers arranged in a single direction has a lot of advantages in a specific rigidity and a specific strength relative to metal materials and therefore is applied to various component parts.

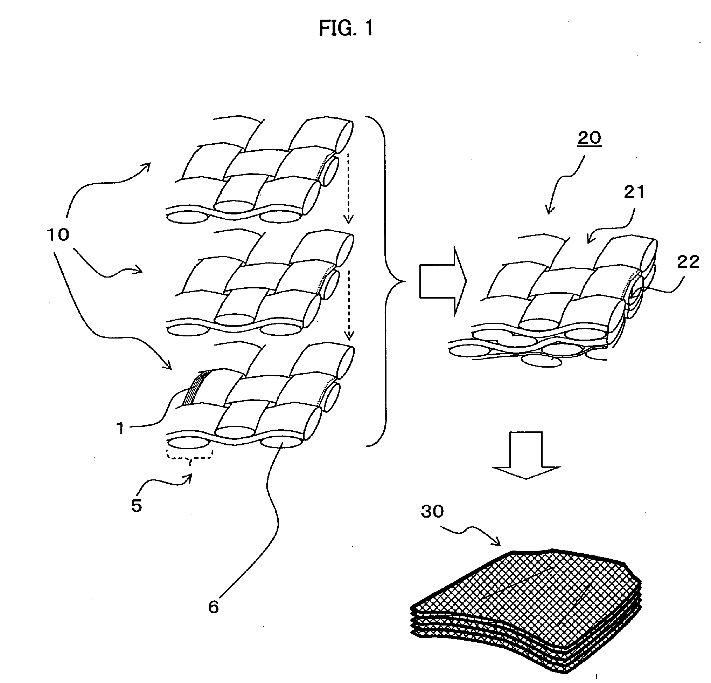

For forming methods of the fiber reinforced plastic made with unidirectional carbon fiber bundles, suggested are various methods, such as a prepreg/autoclave forming method, an RTM (Resin Transfer Molding) forming method, RFI (Resin Film Infusion) forming method or forming methods derived from them. Particularly, RTM forming method has attracted public attentions because it makes it possible to prepare a fiber reinforced plastic having a complicated shape if matrix resin is impregnated and is set in a preform which has been formed so that the fabrics are fixed to each other while keeping its desirable shape with a layered carbon-fiber product which has been made with layered fabrics such as carbon fibers shown in Fig. 1.

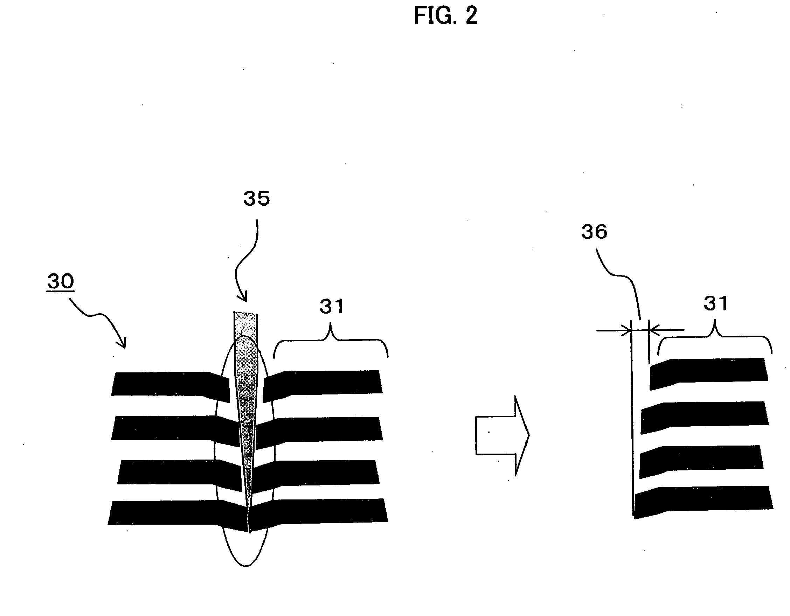

However, because carbon fibers have some rigidity as well as very small diameter around 10$\mu$m, the layered carbon-fiber product or the preform has to be squashed in the part to be cut when the layered carbon-fiber product or the preform is cut by contacting blades, as shown in Fig. 2. Therefore, carbon fibers tend to be frayed in an edge face by the repulsion. Particularly, if they are cut after preparing preforms with layered fabrics, the cross sections tend to be uneven in the thickness direction.

Such preforms may cause a mismatch against the shape of cavity of a forming die on which the preform is placed. If the preform is larger than the forming die, it may be cut so as to trim its shape to fit the forming die, or the preform which is larger than the forming die may be as-is put and formed in the forming die. In the latter case, carbon fibers might be included in the burr of formed fiber reinforced plastics, so as to cause a trouble that the cumbersome burring process is required.

On the other hand, if the preform is smaller than it, a resin-only part (resin-rich part) is formed in a gap toward the forming die, so that the process burying the carbon fiber before pouring matrix resin is further required. In addition, even if the preform almost matches the forming die in a shape, it is difficult to completely suppress the mismatch because edge faces may be frayed while transporting the preform to the forming die.

Thus, because of difficulty of processing the carbon fiber, great manpower has been required for a positioning process of the preform to the forming die, as well as a burring process after the forming.

For such carbon fibers which is easy to fray, suggested are methods, such as a method to sew the edge part of the preform and another method to apply resin material of bonds, etc., to the edge face of the preform to be cut. According to the method to sew the edge part of the preform, slightly inner side from the edge face of the preform is actually sewn. Therefore, cutting the edge face could not completely prevent the carbon fiber from fraying and might cause a secondary fray of the sewing yarn itself. According to the method to apply resin material of bonds, etc., impurities might adhere while applying the resin material, and defects, such as strength poverty of the formed fiber reinforced plastic and crack initiation, might be caused by entraining the air in the resin material. These methods are not efficient enough from a viewpoint that the preform to be cut has to be subject to an additional treatment though having some advantage.

Patent document 1 and patent document 2 disclose a method to prepare a sheet-shaped product from short carbon fibers (about 3-20mm) with phenolic resin, etc., as a technology of binding carbon fibers. They disclose that such a sheet-shaped product is prepared by randomly dispersing the short carbon fibers in a two-dimensional plane before burning in an inert atmosphere together with phenolic resin at high temperature more than approximately 2,000°C. The sheet-shaped product disclosed in these documents is suitably used for producing carbon fiber electrodes. The sheet-shaped product is not impregnated with additional matrix resin before its use. Further, the burning at high temperature more than approximately 2,000 °C makes the short carbon fibers themselves carbonized, and therefore the elastic modulus and the strength which the short carbon fibers themselves have had cannot be maintained.

Patent document 3 and patent document 4 disclose a method to prepare a carbon fiber complex on a three dimension network made from prong-shaped graphene layers including metal fine particles or metal carbide particles by heating mixed hydrocarbon gases made of hydrocarbon up to over 800°C together with catalytic metal fine particles, as another method to bind carbon fibers to each other. However, because the metal fine particles are included as catalyst in these method, produced fiber reinforced plastics might become comparatively heavy, and the heating the carbon fibers up to over 800°C again might make some parts carbonized so that a desirable elastic modulus and a desirable strength are not given.

Patent documents 1-4 disclose technologies for forming three dimension network with carbon binding parts to carbon fibers which are dispersed in a single yarn scale. Therefore, it may not be preferable that they are applied for binding unidirectional carbon-fiber bundles composing a fabric of the present invention, from a viewpoint of impregnation characteristics of resin. The reason is the following.

It is generally known that the resin impregnation into unidirectional carbon-fiber bundles makes the resin permeate by capillarity along the periphery (peripheral surface) of carbon fibers. If there is a binding part as an intersection of three dimension network on a surface of the carbon-fiber bundle, the resin would permeate as circumventing the binding part. Namely, the reason is because the binding part might cause obstruction to the flow as making a difference of the permeation velocity or the permeation distance of the resin between the binding part and the periphery without a binding part and might generate defects such as microvoids and uncompleted impregnation.

Patent document 5 discloses a method to form a coating layer made of carbon on surfaces of graphite particles after treating the graphite particles with surfactant. This is merely a coating technology for spherical carbon, and does not disclose any technical idea to bind a carbon fiber or a carbon-fiber bundle to each other.

Patent document 6 discloses vitreous carbon-coated carbon material. It relates to a technology to produce wafers with carbon material by chemical vapor deposition (CVD), and concretely relates to a technology to form vitreous carbon coat, where the solution prepared with organic polymer, such as heated polyvinyl chloride, dissolved in solvent is applied to the surface of carbon material. In patent document 6, the organic polymer other than the carbon material as a matrix has to be used to form the coat. Though it aims to form the coating without crack and pinhole on the surface of the carbon material, it does not disclose any method to coat random edge faces, such as ones of carbon-fiber bundles.

Patent document 7 discloses a method to prepare a hard film by the arc ion plating. This method relates to a technology to form a film which is made by applying voltage to carbon source on the matrix under low-vacuum condition. Here, the hard film is a carbon network of amorphous carbon which is superior in surface smoothness. Such a method to prepare a hard film cannot be applied to forming a film in the air. Neither a method to cut the matrix nor a method to form random edge faces, such as ones of carbon fiber bundles, are disclosed in the document.

Patent document 8 discloses a method to manufacture vapor phase pyrolytic carbon, where the gas which contains halogenated hydrocarbon is pyrolized at a temperature over 400°C so that carbon is precipitated. In such a method, the pyrolytic carbon made from heated halogenated hydrocarbon in inert gas is filled in the space among fibers of fabric products made from carbon fibers of matrix, so as to manufacture a carbon fiber-carbon composite. It discloses neither the necessity to make the pyrolytic carbon for binding from the halogenated hydrocarbon, nor a concrete method to coat random edge faces such as ones of carbon-fiber bundles.

Patent document 9 discloses a method where pyrolytic carbon coated graphite material is subjected to a heat treatment at 1500-2500°C in halogen gas atmosphere. It discloses neither the necessity to subject the graphite material other than the matrix to a heat treatment in the halogen gas atmosphere, nor a concrete method to coat random edge faces such as ones of carbon-fiber bundles, although discloses an advantage of close linear expansion coefficient between the coating material and the carbon fiber reinforced carbon material.

Prior art documents

Patent documents

Patent document 1: JP2004-288489-A

Patent document 2: JP2005-297547-A

Patent document 3: JP2008-248457-A

Patent document 4: JP2008-163535-A

Patent document 5: JP-3685364-B

Patent document 6: JP63-74960-A

Patent document 7: JP10-25565-A

Patent document 8: JP53-108089-A

Patent document 9: JP10-45474-A

Summary of the Invention

Problems to be solved by the Invention

Thus, it has been necessary to establish a method to prevent carbon fibers from fraying at edge faces of a preform and to form a desirable shape easily, when the preform made from unidirectional carbon-fiber bundles is disposed in a forming die.
Accordingly, an object of the present invention is to provide a layered carbon-fiber product, a preform and processes for producing these, where the edge face of the layered carbon-fiber product or the preform can be easily processed and the carbon fibers are prevented from fraying at the edge face, so as to achieve trimming process with great accuracy.

Means for solving the Problems

To achieve the above-described object, a layered carbon-fiber product according to the present invention is a layered carbon-fiber product, wherein a layered carbon-fiber product obtained by layering one or more sheets of carbon-fiber fabrics each prepared using one or more carbon-fiber bundles each comprising a plurality of carbon fibers arranged in a single direction, characterized in that at least a part of a surface and/or an edge face of the layered carbon-fiber product is constituted of a graphitized part and that the graphitized part exhibits a Raman spectrum in which an intensity ratio of a D band to a G band is 0.3 or less. The intensity ratio of the D band to the G band is calculated by the following formula:

$$(\text{Intensity ratio}) = (\text{D-band intensity} / \text{G-band intensity})$$

It is preferable that the graphitized part is formed on an edge face of the layered carbon-fiber product.
It is also preferable that adjacent carbon fibers are bound to each other in the graphitized part, and is further preferable that the number of the bound carbon fibers is at least 15.
Further, it is preferable that the graphitized part is made of a graphite film having a film thickness equal or less than 0.1mm, and is also preferable that the graphite film has a linear mark on a surface thereof.
It is preferable that the graphitized part has a graphitized cut edge face which is formed on an edge surface cut by radiating a beam.
Furthermore, it is preferable that a longitudinal cut surface of the carbon fiber exhibits the Raman spectrum in which an intensity ratio of a D band to a G band (D-band intensity / G-band intensity) is 0.8 or more, and 1.4 or less.
It is preferable that the carbon fiber includes at least a long fiber of a PAN series carbon fiber.
A preform according to the present invention is a preform made with the layered carbon-fiber product, characterized in that a binding resin material is laid on a surface of the carbon-fiber fabric and the carbon-fiber fabrics adjacent are bound to each other.
A fiber reinforced plastic according to the present invention is a fiber reinforced plastic which is made by impregnating the preform with a matrix resin to be hardened.
Further, to achieve the above-described object, a process for producing a layered carbon-fiber product according to the present invention is a process for producing a layered carbon-fiber product, which is obtained by layering one or more sheets of carbon-fiber fabrics each prepared using one or more carbon-fiber bundles each comprising a plurality of carbon fibers arranged in a single direction, characterized in that: a surface and/or an edge face of the layered carbon-fiber product is graphitized by radiating a beam to the layered carbon-fiber product.
In the process, it is preferable that the beam is radiated to the layered carbon-fiber product to cut the layered carbon-fiber product into a predetermined shape and a cut surface is graphitized.
It is preferable that at least one of an energy density, an operation speed and a depth of focus is controlled in radiating the beam, and is also preferable that the beam is any of a spot laser and line laser.
Furthermore, to achieve the above-described object, a process for producing a preform according to the present invention is a process for producing a preform made with any of the layered carbon-fiber products, characterized in that a binding material is laid on a surface of the carbon-fiber fabric and a preform, in which the adjacent carbon-fiber fabrics are bound to each other, is graphitized by radiating any of the beams.

Effect according to the Invention

The present invention makes it possible that layered carbon-fiber material products or the edge face of preforms are easily processed, and a trimming process is achieved by a high precision without fraying of carbon fibers at edge faces. Therefore, layered carbon-fiber products or preforms can be positioned in a forming die easily and accurately. If the positioning to the forming die is simplified and the burring work is omitted, the low cost and the short production time can be achieved by the reduced manpower. Further, the crack generation can be prevented with hard graphite film on the edge part of the fiber reinforced plastic prepared by forming the preform. Furthermore, layered carbon-fiber products and preforms can be trimmed accurately in a short time with laser beam, etc., without using other materials such as carbon material and halogenated hydrocarbons.

Brief explanation of the drawings

[Fig. 1] Fig. 1 is a schematic partial perspective view showing an embodiment of a carbon-fiber fabric, a layered carbon-fiber product and a preform used for the present invention.
[Fig. 2] Fig. 2 is a schematic diagram showing a preform which is being cut by a blade.
[Fig. 3] Fig. 3 is a schematic diagram showing an embodiment of a layered carbon-fiber product of which at least a part of a surface and/or an edge face is graphitized, where (a) is a schematic partial perspective view of the layered carbon-fiber product, (b) is an enlarged observation of the edge face and (c) is a further enlarged observation of the graphitized part of the edge face.
[Fig. 4] Fig. 4 is a schematic diagram showing B-B' section which is exposed by cutting the edge face of the unidirectional carbon-fiber bundle in Fig. 3(b) in a longitudinal direction, where (a) shows an as-is condition and (b) shows a condition after partially exfoliating the graphitized part.
[Fig. 5] Fig. 5 is an enlarged observation viewed from a perpendicular direction, showing an edge part of a unidirectional carbon-fiber bundle of which graphite film is partially exfoliated.
[Fig. 6] Fig. 6 is a schematic diagram of a unidirectional carbon-fiber bundle according to the present invention, where (a) shows a graphitized part which is formed at an edge part of the unidirectional carbon-fiber bundle and which cannot exfoliate even when touched with fingers, and (b) shows a graphite film which is formed along a longitudinal direction of the unidirectional carbon-fiber bundle and which cannot exfoliate even touched with fingers.
[Fig. 7] Fig. 7 is a schematic diagram of a conventional unidirectional carbon-fiber bundle, where (a) shows an edge face of the unidirectional carbon-fiber bundle which was frayed by touching with fingers, and (b) shows the unidirectional carbon-fiber bundle frayed by touching with fingers in the middle of the length.
[Fig. 8] Fig. 8 is a profile obtained by the laser Raman spectroscopy analysis about a surface and/or an edge face of a layered carbon-fiber product as an embodiment of the present invention.
[Fig. 9] Fig. 9 is a schematic diagram showing an embodiment of a preform which is cut by laser beam radiated from the upper side of the preform of the present invention.
[Fig. 10] Fig. 10 is an observation showing examples of a process cutting a preform into various shapes (rectangular, disk-shaped and chamfered corner-shape), where (a) shows a cutting process by radiating laser beam and (b) shows another cutting process by a blade into the same shape of (a).
[Fig. 11] Fig. 11 is a schematic framework showing a manufacturing process for RTM forming.
[Fig. 12] Fig. 12 is a schematic framework showing a positioning process and a clamping process in Fig. 11.
[Fig. 13] Fig. 13 is a schematic partially enlarged section view of C-C' section in the positioning process and the clamping process in Fig. 12, where (a) exemplifies a preform which is cut in a larger shape than the cavity, (b) exemplifies a preform which is cut in a net-shape and (c) exemplifies a preform which is cut in a net-shape and of which edge face is graphitized.
[Fig. 14] Fig. 14 is a schematic diagram which shows an demolding process after forming each preform positioned in Fig. 13 and which shows a fiber reinforced plastic having a burr, where (a) exemplifies a preform which is cut in a larger shape than the cavity, (b) exemplifies a preform which is cut in a net-shape and (c) exemplifies a preform which is cut in a net-shape and of which edge face is graphitized.

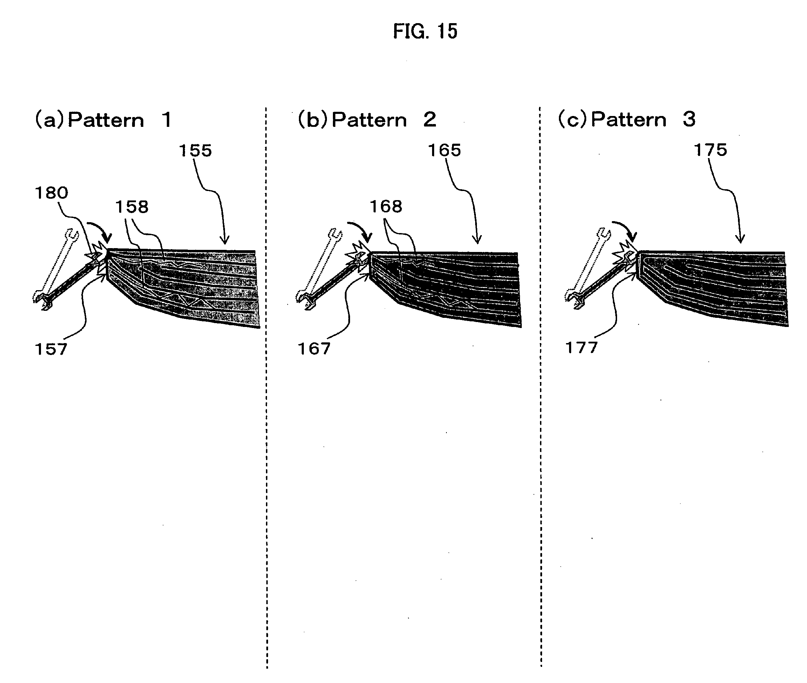

[Fig. 15] Fig. 15 is a schematic diagram showing a fiber reinforced plastic in Fig. 14, of which edge face is hit by a spanner wrench, where (a) exemplifies a preform which is cut in a larger shape than the cavity, (b) exemplifies a preform which is cut in a net-shape and (c) exemplifies a preform which is cut in a net-shape and of which edge face is graphitized.
[Fig. 16] Fig. 16 is a schematic framework showing a processing test equipment which cuts a preform with laser beam.
[Fig. 17] Fig. 17 is a profile obtained by the laser Raman spectroscopy analysis in the air about a surface and/or a edge face of a layered carbon-fiber product as an embodiment of the present invention.

[Fig. 18] Fig. 18 is a profile after having removed the influence of the fluorescence background from the profile obtained by the laser Raman spectroscopy analysis in Fig. 17.

[Fig. 19] Fig. 19 is a schematic framework showing a processing test equipment which graphitizes a surface of a preform with laser beam.

Embodiments for carrying out the Invention

Hereinafter, desirable embodiments will be explained as referring to figures.

Layered carbon-fiber product 20 as an embodiment of the present invention will be explained as referring to Fig. 1. Layered carbon-fiber product 20 is made by layering one or more carbon-fiber fabrics which have been formed with unidirectional carbon-fiber bundles 5 made of a plurality of carbon fibers 1 arranged in a single direction. The number of carbon fibers 1 in unidirectional carbon-fiber bundle 5 is preferably around 3,000-24,000 which is enough to maintain a shape of carbon-fiber fabric 10, though the number is not limited thereto. It is preferable that carbon-fiber fabric 10 has a configuration, such as plain weave, twill and sateen weave. It is also preferable that it is configured as a unidirectional fabric matrix made with unidirectional carbon-fiber bundle 5 arranged in a single direction, or a multiaxial stitch matrix. Layered carbon-fiber bundle product 20 can be formed into preform 30 having a three dimensional shape, etc. Details of preform 30 will be described later.

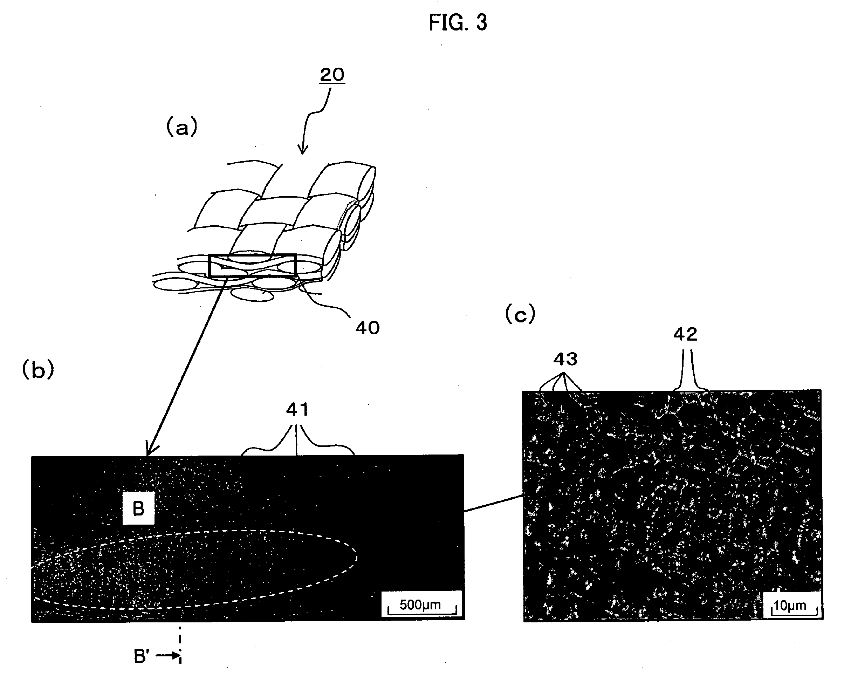

In Fig. 3, (a) is a schematic diagram showing an embodiment of layered carbon-fiber product 20 of which at least a part of a surface and/or an edge face is graphitized and which represents characteristics of the present invention. (b) is an enlarged observation of the edge face and (c) is a further enlarged observation of the graphitized part of the edge face. In Fig. 3(b), the large ellipse corresponds to edge part 6 of unidirectional carbon-fiber bundle 5, and the layered product between edge part 6 and its adjacent edge part 6 (the group extending toward right and left in the Fig.) is a cross section of unidirectional carbon-fiber bundle 5 provided along a longitudinal direction, and is surrounded by graphitized part 40 as shown in almost a whole of Fig. 3(b). It is preferable that graphitized part 40 has a plurality of linear marks 41 along the thickness direction of layered carbon-fiber product 20. Linear mark 41 is formed with a refined asperity which contributes to improvement in strength of edge part 6. Linear mark 41 is an aspect derived from manufacturing process, and is formed along the direction of energy radiation described later.

In Fig. 3(c) where graphitized edge part 6 is enlarged, there are binding part 42 and salients 43. Salient 43 is regarded as a position corresponding to edge part 2 of carbon fiber 1 constituting unidirectional carbon-fiber bundle 5. These salients 43 are connected to binding part 42 in some regions, and salients 43 are directly connected to each other in the other regions. Besides, Fig. 3(c) shows an embodiment in the present invention, as one example among various embodiments.

Regardless of the interposition of binding part 42, it is preferable that adjacent carbon fibers 1 are bound at graphitized part 40. Though a whole of graphitized part 40 is preferably formed uniformly, graphitized part 40 may not be easily formed in a region having a large void because carbon fibers 1 are eccentrically located in unidirectional carbon-fiber bundle 5.

It is more preferable that there is a region where the number of bound carbon fibers 1 is more than 15. In order to develop machine characteristics of a fiber reinforced plastic it is preferable that carbon fibers 1 are close-packed and impregnated with resin. The volume fiber content in a fiber reinforced plastic is generally expressed as Vf. Vf is required to be around 55-65%, in a technical field of excellent machine characteristics aimed at airplanes or cars. The upper limit of Vf is regarded as around 70%, from a viewpoint of close packing. For example, in a case where carbon-fiber fabrics having a weight per unit area of 190g/m$^2$ are layered so as to satisfy the formula "Vf = 70%", it is preferable that carbon fibers 1 are bound so that the thickness is composed by at least 15 carbon fibers 1, which form unidirectional carbon-fiber bundle 5 and which have a diameter of 10$\mu$m and a density of 1.8g/cm$^3$, and unidirectional carbon-fiber bundle 5 is restrained at least in a thickness direction.

The thickness can be calculated by the following formula.

$$\text{(Weight per unit area)/(density)/(Vf)} \,/10 = \text{(thickness) (mm)}.$$

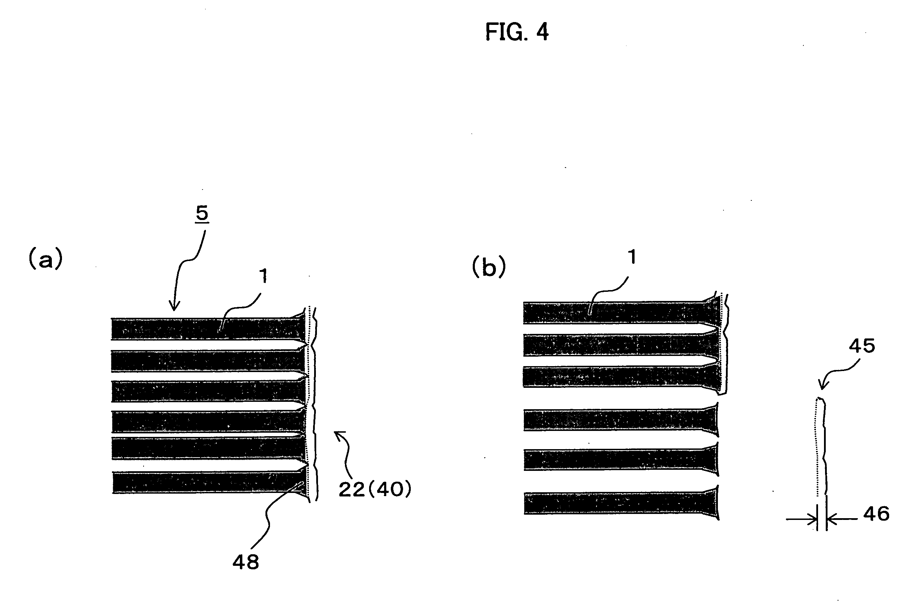

Fig. 4(a) is a schematic diagram showing B-B' section which is exposed by cutting edge face 6 of unidirectional carbon-fiber bundle 5 in Fig. 3(b) in a longitudinal direction (perpendicular direction to the plane of paper). Fig. 4(b) is a schematic diagram showing a condition thereof after partially exfoliating graphitized part 40. Besides, Fig. 4 (a) (b) depicts only one unidirectional carbon-fiber bundle 5 for simplification. In Fig. 4 (a) (b), graphite film 45 coating carbon-fiber edge part 48 of which edge part 2 of at least a part of carbon fiber 1 is flared into a funnel shape and is graphitized in graphitized part 40 formed on edge face 22.

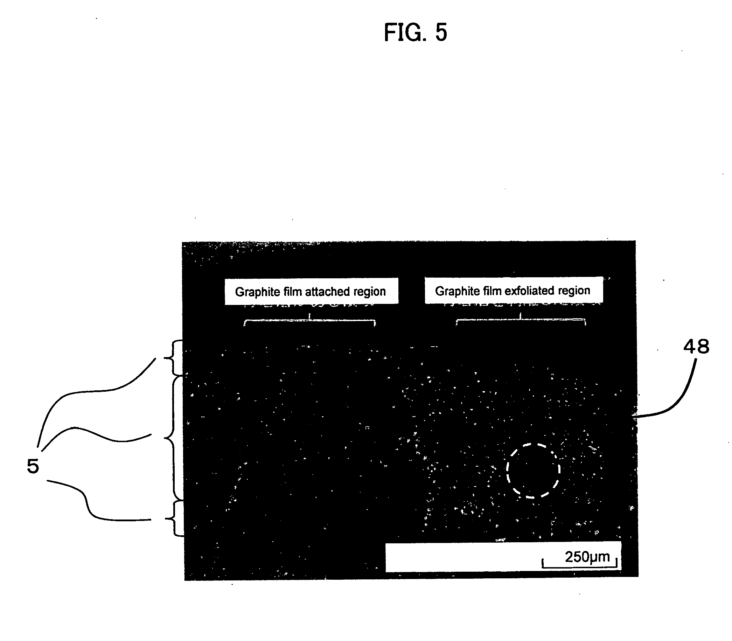

Fig. 5 is an enlarged picture viewed from a direction perpendicular to edge part 6 of unidirectional carbon-fiber bundle 5, showing a part of partially exfoliated graphite film 45. Many carbon-fiber edge parts 48 are exposed from the region where graphite film 45 has been exfoliated.

As shown in Fig. 4(b), film thickness 46 of graphite film 45 which has been exfoliated from graphitized part 40 in edge face 22 is preferably set less or equal to 0.1mm, and is more preferably set less or equal to 0.05mm. Setting it less or equal to 0.1mm can give deformability to graphite film 45 itself. The lower limit is not defined as far as the film is formed. Because graphite film is bound on its backside with many carbon-fiber edge parts 48 which have been graphitized, even if an external force is applied to graphite film 45 a plurality of carbon fibers 1 share a burden, so that the shape of layered carbon-fiber product 20 is stabilized without breaking graphite film 45.

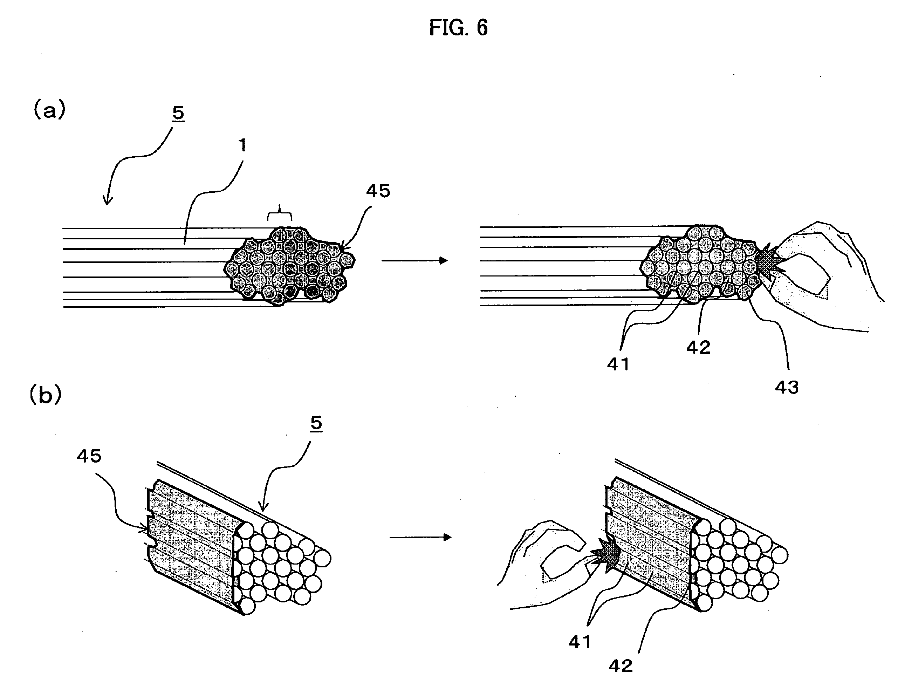

Even if graphite film 45 formed on edge part 6 of unidirectional carbon-fiber bundle 5 shown in Fig. 4(a) (b) is fingered as shown in Fig. 6(b), graphite film 45 is not exfoliated and carbon fibers 1 are not frayed. Fig. 6(b) shows a schematic diagram where graphite film 45 is formed along a longitudinal direction of unidirectional carbon-fiber bundle 5. In Fig. 6(b), graphite film 45 is formed as coating the longitudinal section of carbon fiber 1, and binding parts 42 are formed among carbon fibers 1, as also shown in Fig. 6(a). Even if graphite film 45 shown in Fig. 6(b) is touched with fingers, neither graphite film 45 is exfoliated nor carbon fibers 1 are frayed.

Thus regardless of orientation of unidirectional carbon-fiber bundle 5, if graphitized part 40 is formed with graphite film 45 on the surface and/or edge face of layered carbon-fiber product 20, carbon fibers 1 can be formed by a predetermined dimension accuracy without fraying. Even if touched with fingers, graphite film 45 would not be exfoliated nor carbon fibers 1 are frayed, so that the transportation work is made easy and the repair work is made needless. Further, if graphitized part 40 is selectively formed at the edge part of layered carbon-fiber product 20, the inside of layered carbon-fiber product 20 is desirably made in a homogeneous form. The homogeneous form, for example, makes it possible that layered carbon-fiber product 20 is homogeneously impregnated with resin to generate fiber reinforced plastics.

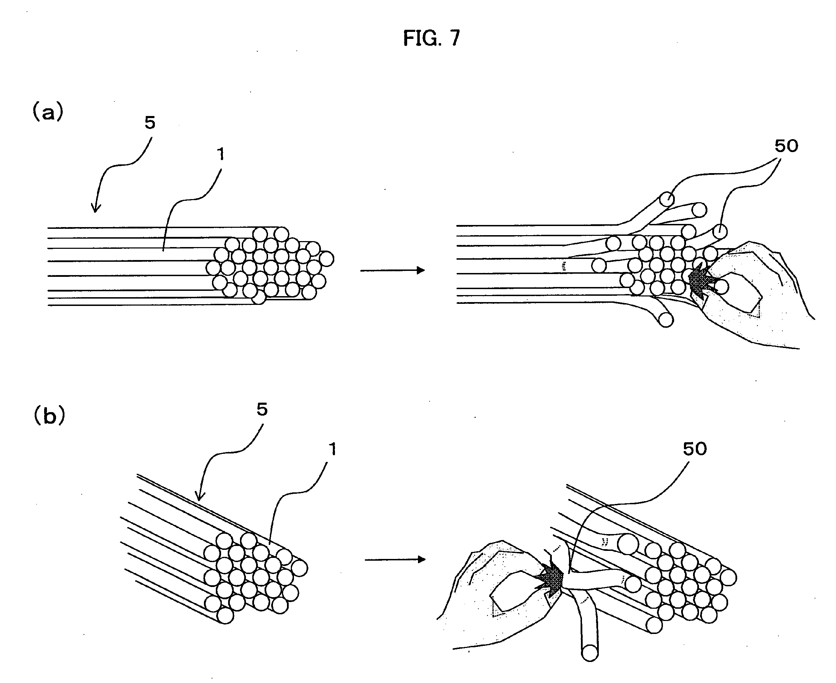

On the other hand, if such graphite film 45 is not formed, fingers touched to unidirectional carbon-fiber bundle 5 would bend carbon fibers 1 or fray 50 flaring outward would be caused, as shown in Fig. 7(a) (b). As a result, the dimensional accuracy of the surface and/or edge face of layered carbon-fiber product 20 becomes worse and carefully handled, and therefore working hours might be increased and repair works might become necessary.

Hereinafter, the procedure to measure film thickness 46 will be explained.
Graphite films 45 are exfoliated and collected with something like tweezers from edge part 6 of unidirectional carbon-fiber bundle 5. Because collected graphite films 45 are fragile, cubes larger than 0.1 mm cube are selected to be determined as nipped by a double flat micrometer. The number of samples (N) is more or equal to 5, and the final value is calculated by averaging measurement values. In a case where graphite film 45 exists in a fiber reinforced plastic, the measurement can be achieved similarly by a micrometer after collecting graphite film 45 from a sample which has been burnt to remove resin component by an electric furnace or of which resin component has been decomposed with concentrated nitric acid or concentrated sulfuric acid and removed by a residual washing (ASTM D 3171).

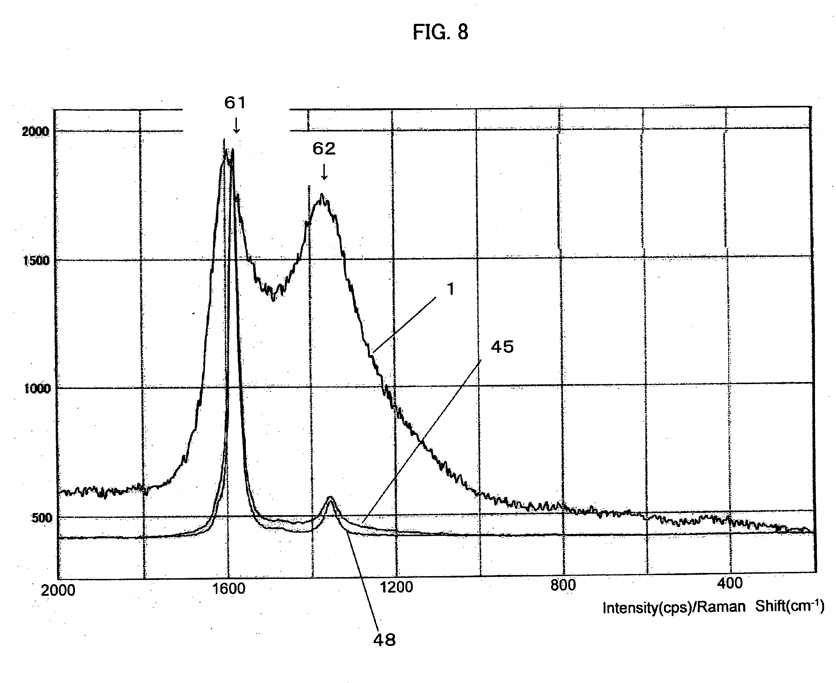

It is important in the present invention that the intensity ratio of Raman spectrum of graphitized part 40 is in a predetermined range. Fig. 8 depicts a profile obtained by the laser Raman spectroscopy analysis about surface 21 and/or edge face 22 of layered carbon-fiber product 20 of which part has been collected as needed. Fig. 8 shows the following three kinds of analytical result. (1): Carbon fiber 1 in a region where graphitized part 40 is not formed. (2): Graphite film 45 which is formed in graphitized part 40. (3): Graphitized carbon-fiber edge part 48 which is obtained by exfoliating graphite film 45 to be exposed. Since all of the three kinds are carbon crystals, it shows D band showing a peak around wavelength $1360cm^{-1}$ and G band showing a shifted peak around wavelength $1580cm^{-1}$. Fig. 8 shows D band and G band, where the peak of D band is greatly affected by the existence of graphitization.

What is called graphitization is to be burnt at a high temperature over 200°C, which is different from carbonization which means to be burnt at a low temperature from 700°C to 2000°C. As to graphitized graphite film 45 and graphitized carbon-fiber edge part 48, it is important that the intensity ratios which are calculated by the following formula from the peaks of G band and D band of the graphitized part are less or equal to 0.3. More preferably, they are less or equal to 0.2. Because the elastic modulus of carbon material becomes greater in a crystal orientation direction when is further carbonized, the smaller intensity ratio is regarded as being the harder. In other words, graphitized graphite film 45 and graphitized carbon-fiber edge part 48 are supposed to be harder than the other parts which are not graphitized, so that fray 50 of edge part 2 of carbon fiber 1 is prevented as maintaining its shape. Therefore, it is preferable that the intensity ratio is smaller, and in particular, is smaller than the intensity ratio of the raw carbon fiber.

$$(Intensity\ ratio) = (Intensity\ of\ D\ band) / (Intensity\ of\ G\ band)$$

Intensity: Value, which has been subjected to baseline correction, of Y-axis value of G, D band shown in Fig. 8

As carbon fiber 1 in the present invention, it is preferable that a so-called high strength type of carbon fiber, which has been burnt at a low temperature, is employed, from a viewpoint of energy saving for manufacturing relative to a high elastic type thereof. Further, it is preferable that carbon fiber 1 is a PAN series carbon fiber including a long fiber. Because the PAN series carbon fiber consists of a kind of component, it is easier to handle than a pitch series carbon fiber, and can be given a high strength at a lower temperature than a rayon series. What is called the long fiber is a continuous fiber, and is desirable because it can achieve high elastic modulus and high strength in fiber reinforced plastics of which reinforcing fibers take a burden.

As to carbon fiber 1 which is not graphitized, it is preferable that an intensity ratio of G band to D band of a Raman spectrum obtained by a laser Raman spectroscopy analysis is more or equal to 0.8 and less or equal to 1.4. The range which is defined by "more or equal to 0.8 and less or equal to 1.4" corresponds to a PAN series carbon fiber which has been burnt at a temperature from 800-2000°C. It has not been graphitized. Therefore, the edge rigidity can be desirably improved by a graphitized part of the present invention.

Next, desirable embodiments of preform 30 made with carbon-fiber fabric 10 will be explained. Preform 30 in the present invention is layered carbon-fiber product 20 which has been made by layering carbon-fiber fabric 10 and is shaped and maintained in its shape. In order to maintain the shape, a method, such as sewn product manufacturing, sewing carbon-fiber fabrics to each other by so-called stitching, envelope unification of carbon fibers by needling carbon-fiber fabrics with a barbed needle, unification of carbon-fiber fabrics with tackifier resin and unification by heating carbon-fiber fabric 10 made by weaving thermoplastic resin fiber with carbon fiber 1, can be employed.

Particularly in the present invention, it is preferable that preform 30 is manufactured by heating and cooling layered carbon-fiber product 20 made by layering carbon-fiber fabric 10 which has been applied with particulate tackifier resin which is easy to be maintained in the shape of preform 30 in a shaped condition as softening, bonding and solidifying the particulate tackifier resin. Further, it is preferable that the surface of carbon-fiber fabric 10 is applied with the particulate tackifier resin so as not to block the impregnation of matrix resin into the inside of unidirectional carbon-fiber bundle 5.

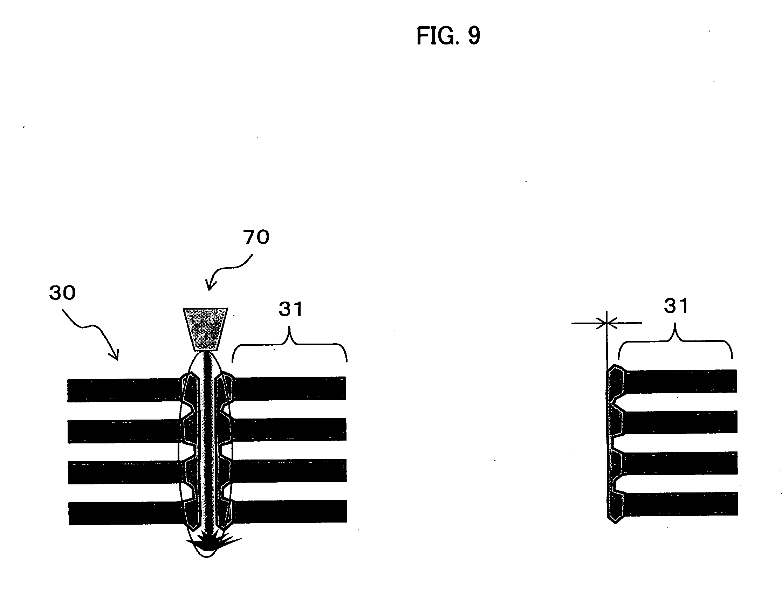

Next, a method to form graphitized part 40 on edge face 22 of layered carbon-fiber product 20 or preform 30 will be explained, as referring to preform 30 exemplified in Fig. 9. As shown in Fig. 9, a beam typified by a laser beam 70 is radiated from the upper side of preform 30, so that preform 30 is cut without touching with blade 35, etc., and graphitized part 40 is formed on edge face 22. Unlike a conventional contact cutting method by blade 35 as shown in Fig. 2, cut edge face 22 of preform 31 at the side of a product is provided with graphitized part 40 as described above. Edge parts 2 of carbon fiber 1 are restrained by each other, so that fray 50 of carbon fiber 1, the fray of unidirectional carbon-fiber bundle 5 and the gap between layers of carbon-fiber fabric 10 are prevented desirably.

Among the above-described non-contact cutting method using the laser beam, preferable is a laser beam cutting method which can be used to cut in the air without vacuuming. A solid-state laser, a semiconductor-excited solid-state laser and a semiconductor laser, which have higher densities than gas or liquid and which output greatly per unit volume, are more preferable than X-ray laser of which wavelength is in the range of ultraviolet ray. However, an excimer laser which can be used to cut a bonding between molecules without thermally affecting the environment might be used at a high output desirably. Further, it is preferable that CW laser (Continuous Wave Lazer), such as fiber laser and disk laser, which is excellent in a cooling efficiency and which can continuously radiate, is employed as an oscillator of the solid-state laser or a diode-pumped solid-state laser. Both of them have few heat distortion and few deterioration of a solid crystal which have been caused in a solid-state laser such as YAG, and a continuous radiation can be performed. It is preferable that a laser beam which can radiate continuously is scanned because continuous graphite film 45 can be formed on cut face and the fray of unidirectional carbon-fiber bundle 5. A mirror type and a fiber type are exemplified as a transmission method of the laser beam though not limited thereto. Further, in a case where a spot laser which radiates in spots does not sufficiently output, a line laser which transports spotted laser beams with a prism into a linear laser, so that surface 21 and edge face 22 are desirably used to reform to graphitized part 40. Furthermore, it is preferable to use a galvano mirror when the output is not sufficient with the line laser.

Further, if the output of the laser beam is more or equal to 100W and the converging diameter is less or equal to 100$\mu$m, the energy density, which is obtained from the output and the converging diameter, can be set more or equal to $100/(\pi*500*500) \approx 1.2*10^{-4}$ (W/$\mu$m$^2$). Such amount of energy density would quickly heat carbon fiber 1 to a temperature required to be sublimed and cut desirably. It is more preferable that the energy density is more or equal to 0.01 (W/$\mu$m$^2$). It is practically preferable that the feeding speed of the laser beam is more or equal to 0.1m/min. It is preferable that the depth of focus is chosen appropriately by a subject work. In order to cut a heavy fabric as having a thickness of more than 2mm, it is preferable that the depth of focus is from -1mm to +1mm relative to the surface of the work, so that a hole is bored on the surface of the work in a short time and the laser beam is efficiently projected into the bored hole in a thickness direction.

The laser beam is broaden around the focus to narrow the focus. Therefore, if the focus is positioned at the lower surface of the work in a thickness direction, because a laser beam of which focus has not been sufficiently narrowed is radiated to the surface of the work, the cutting might not be performed at desirable speed. It is preferable that the cutting is performed in an atmosphere containing more nitrogen than the air. When the laser beam is radiated in the air, carbon fibers might catch fire to deteriorate by the fire or the burning. Nitrogen can be supplied by a method to suck from a hose which is lead from a nitrogen cylinder to an radiation head of laser beam as blowing concentrically and a method to inject laterally from a nitrogen nozzle attached to the laser head, though not limited thereto.

By such a laser oscillator which can continuously radiate, carbon fiber 1 made of extremely thin fiber would hardly remain uncut. A heavy fabric having a thickness more or equal to 2mm as a bulky fabric which is not stably formed, such as unidirectional carbon-fiber bundle 5, carbon-fiber fabric 10, layered carbon-fiber product 20 and preform 30, and above all in particular, layered carbon-fiber product 20 made of dry carbon fiber 1 and preform 30 can be cut precisely. After cutting, carbon fiber 1 does not tend to fall off during separating chips from preform 31 at the product side, rapid process can be performed even if applied to a complicated shape because a postprocessing is not necessary. For example, surround of preform 30 can be cut to form a complicated shape such as three dimension shape of a car bonnet, and other various processing such as boring a hole can be performed suitably.

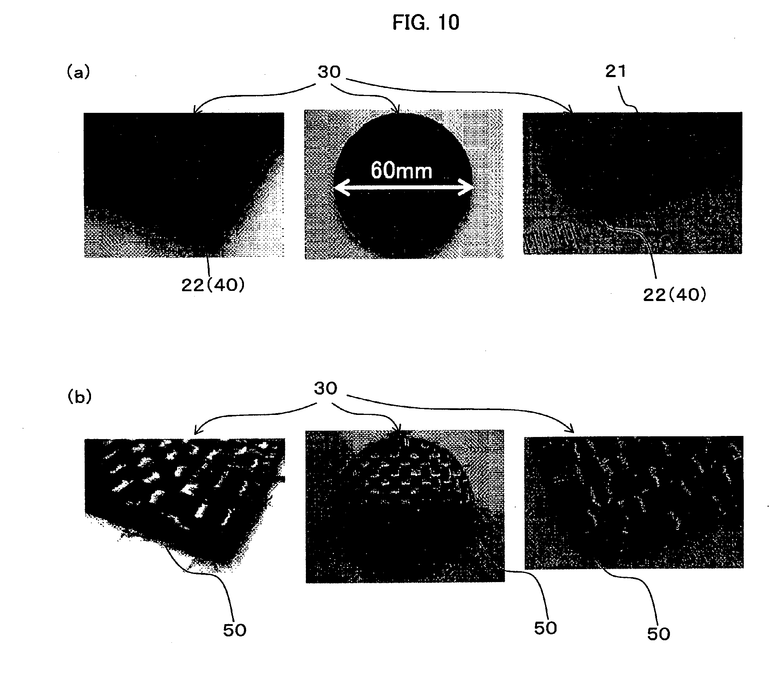

Fig. 10 shows an example of a cutting process. Fig. 10(a) shows an example of preform 30 which has been processed by laser. The rectangle at the left as well as the small disk with a diameter of 60mm at the center can be formed by the precise cutting. Further, an example of so-called R-processing in which corner has been chamfered is shown at the right. In each case, fray 50 of carbon fiber 1, from either edge face 22 or surface 21, has not been observed, so that a net-shape preform of which surface of graphitized edge face 22 is smooth is prepared. Here, the word "net-shape" means a condition where dimension accuracy is precise. Fig. 10(b) shows a result of having cut the same shape with a blade. In each case of rectangle, disk-shaped and chamfered corner, fray 50 of carbon fiber 1 has been generated at some sites, and a part of surface 21 has been fallen off. It found that such preform 31 requires a postprocessing of fray 50, as well as a repair process where another carbon-fiber fabric 10 is added to the missing part.

Hereinafter, the reason why a cutting method for chemical fibers made of nylon or polyester fiber cannot be applied for cutting carbon fibers will be explained. When chemical fibers are cut by a contact cutting with blade 35 as described above, trouble of fraying at the edge face has been caused like carbon fibers. However, because chemical fibers take three states of solid, liquid and gas when heated under ordinary temperature and ordinary pressure, the fraying can be prevented by a method, such as cutting with a blade which has been heated to a temperature higher than the melting point of the chemical fiber and melting the edge face fibers simultaneously with cutting as using friction heat which has been generated between the blade and the chemical fiber during cutting.

On the other hand, the same principle cannot be applied to a carbon fiber which sublimates under ordinary temperature and ordinary pressure and which takes two states of solid and gas. Carbon could take three states under a pressurized condition. However, it is not realistic because ultra-high pressure around 100MPa is required to generate such a pressurized condition. Accordingly, the above-described laser processing is performed to make it possible to form graphitized part 40 directly on the surface and/or the edge face without preparing any material, such as carbon and halogenated hydrocarbon, other than layered carbon-fiber product 20.

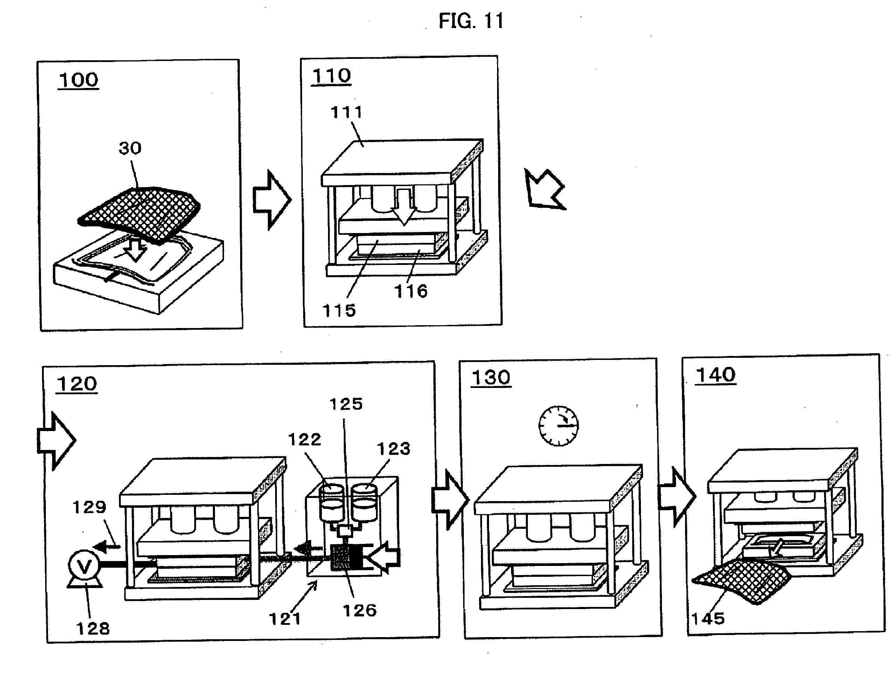

Next, RTM forming method as an example of methods to form fiber reinforced plastic 145 with layered carbon-fiber product 20 or preform 30, which are prepared in the present invention, will be explained with Fig. 11. The processes of RTM forming method is composed of the followings:

(1) Preform positioning process 100 to position preform 30 on lower die 116;
(2) Clamping process 110 to clamp upper die 115 and lower die 116 with pressing machine 111;
(3) Pressured resin injection process 120 to inject mixed resin, after insides of the clamped upper and lower dies are vacuumed and main agent 122 and cure agent 123 are mixed with mixer 125 and pressured with pump 126;
(4) Hardening process 130 to harden the mixed resin;
(5) Demolding process 140 to demold fiber reinforced plastic 145 after opening the upper and lower dies.

Difference of fiber reinforced plastics 145 manufactured with preforms 30, which have been cut by different cutting methods in RTM molding method, will be explained.

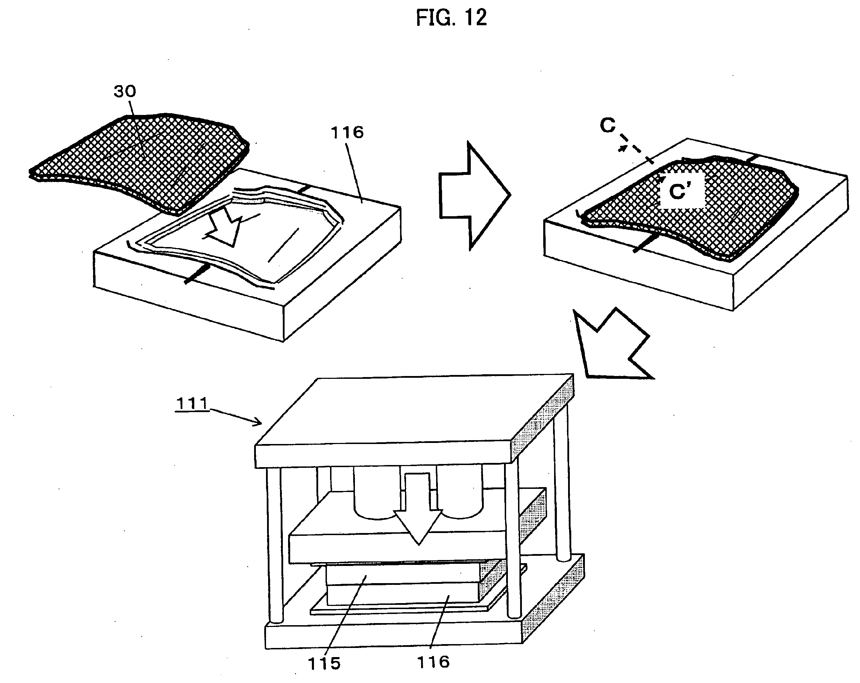

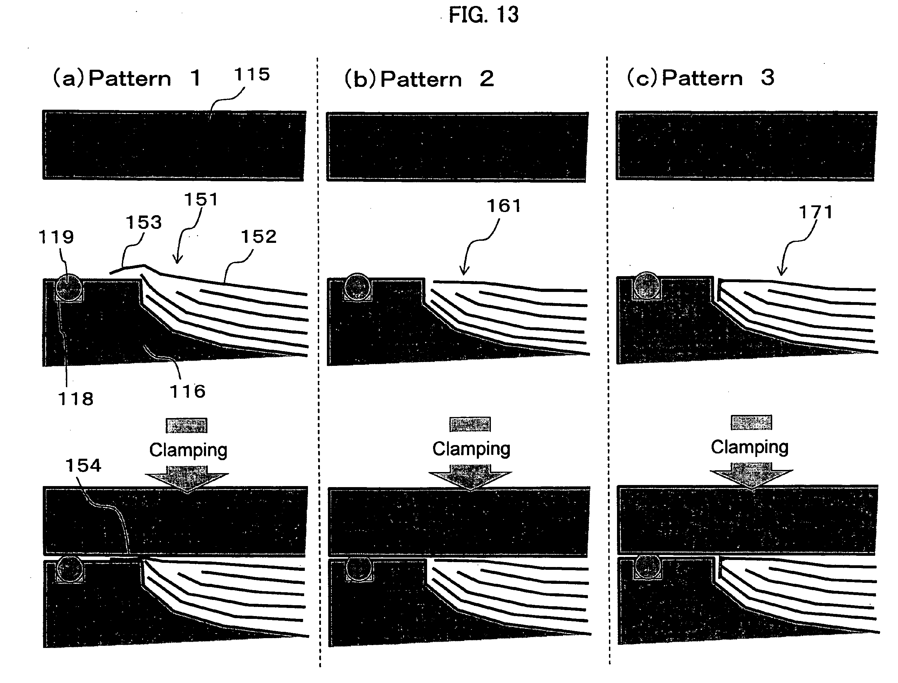

Fig. 12 is an enlarged view showing preform positioning process 100 and clamping process 110. Preform 30 is positioned on lower die 116 and lower die 116 is moved into pressing machine 111, and then upper die 115 is clamped. Fig. 13 shows this process flow which is viewed from C-C' section (enlarged section near the edge part of preform 30). Lower die 116 is provided with O-ring groove 118 therearound and O-ring 119 is inserted in the groove. Because O-ring 119 is folded to seal upper die 115 and lower die 116 which are clamped, resin injected at pressured resin injection process 120 as a postprocessing is prevented from spilling over from the upper and lower dies.

Preform 30 is positioned in a predetermined-shaped cavity which is formed in lower die 116. Therefore, unless the edge part of preform 30 is properly treated, troubles might be caused like the edge part of fiber reinforced plastic 145 has insufficient strength after forming or burrs are generated. Specific examples will be explained with Fig. 13 in a molding process order, as preparing the following three kinds of preforms. Besides, an example of a preform, which has been cut into a size smaller than the cavity and which might generate a resin-rich site at the edge part, will be omitted.

Pattern 1: Preform 151 which is cut into a size greater than the cavity

Pattern 2: Preform 161 which is cut in a net-shape
Pattern 3: Net-shape preform 171 of which edge face is graphitized

In Fig. 13, pattern 1 is preform 151 which is cut into a size greater than the cavity of lower die 116, and there exists side drop 153 which is made of an edge part of carbon-fiber fabric 152 which is run off lower die 116. Therefore the clamping may generate bite 154 of carbon-fiber fabric 152. On the other hand, preform 161 in pattern 2 and net-shape preform 171 of which edge face is graphitized in pattern 3 have almost the same shape of lower die 116, and therefore bite 154 is not generated, so as to control the product thickness and the porosity. For each of 1 pattern 1 - pattern 3, pressurized resin injection process 120 and hardening process 130 were carried out.

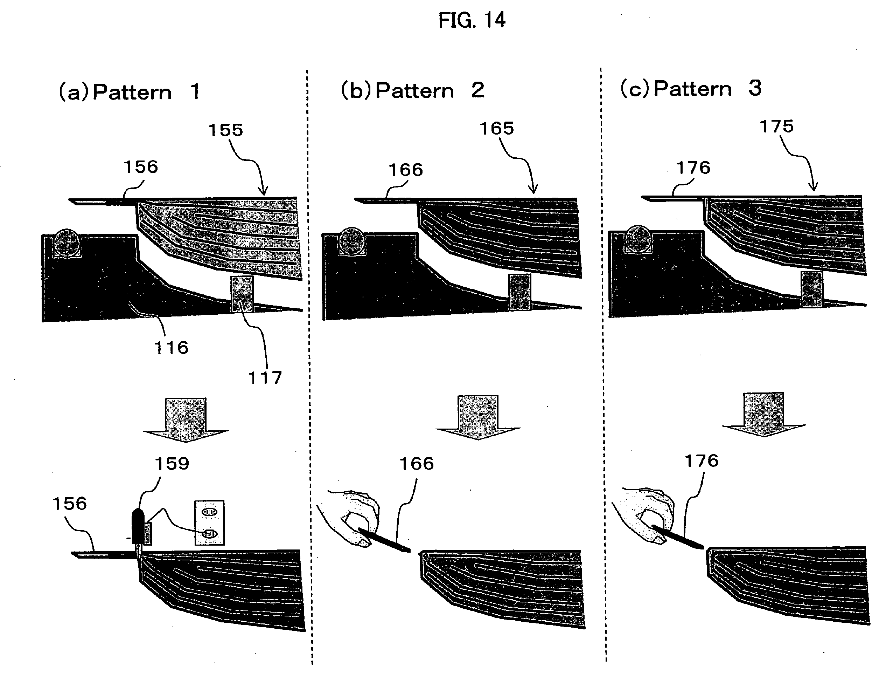

The postprocessing of fiber reinforced plastic obtained after hardening will be explained with Fig. 14. In demolding process 140, upper die 115 (not shown) is raised and then ejector pin 117 is raised from lower side of lower die 116, so that reinforced plastics 155, 165 and 175 are demolded. Because burr 156 including carbon fiber is formed by bite 154 in pattern 1 shown in Fig. 14(a), burr 156, which is reinforced by carbon fiber, is not easily removed, so that a work using electric grinder 159 is required. On the other hand, film-shaped burrs 166 and 176 made of resin only are formed in pattern 2 and pattern 3 shown in Fig. 14(b) (c), and are dragged by upper die 115 raised at the time of demolding or are easily removed by folding with hands, etc. Thus the preform is preferably positioned on lower die 116 after a net-shape is made.

Further, when edge faces 157, 167 and 177 of thus prepared three kinds of fiber reinforced plastics 155, 165 and 175 are touched with a tool of spanner wrench 180, etc., by mistake of work, cracks 158 and 168 are developed greatly from edge faces 157 and 167 on fiber reinforced plastics 155 and 165 in pattern 1 and pattern 2, while there generated few crack on fiber reinforced plastic 175 in pattern 3. The crack generation depends on the internal structure of the fiber reinforced plastics. Reinforced plastics are isotropic products prepared by layering carbon fiber fabrics to give required rigidity and strength along a specified direction as well as products formed by heating and cooling resin material with which a carbon-fiber preform is impregnated. Therefore, each layer composing the fiber reinforced plastic has a strain along a different direction, and inherently has a residual strain and a residual stress between layers. Therefore if there exist carbon-fiber bundles and carbon-fiber fabrics on the edge face of fiber reinforced plastics or they are exposed by cutting, an impact power applied to the edge face tends to generate cracks between carbon fibers, carbon-fiber bundles and carbon-fiber fabrics.

In contrast thereto, because net-shape preform 171 having the graphitized part on edge face 177 by cutting with laser beam, etc., as shown in the present invention, is provided with graphite film 45 as described above, when such an impact power is applied thereto, graphite film 45 would function as a breakwater and would prevent generating such cracks between carbon fibers, carbon-fiber bundles and carbon-fiber fabrics. As a result, simplification of postprocessing leads to a combined effect that the low cost and short production time are achieved by reducing manpower and that the durability against the impact power onto the edge face, the fatigue strength and the rigidity are secured.

Though the preform which is cut with laser beam and which is provided with the graphitized part on the edge face has been explained, another method to bind carbon fibers on the edge face may be employed as well. For example, the edge face may be hardened by an induction hardening which is applied to metal materials. Further, material such as metals may be coated though there remains a problem about the specific gravity, etc.

In order to prevent a crack from developing on the edge face of fiber reinforced plastics which have been formed, a method, such as a method to overlay material made from resin material and reinforcing fibers so as to cover the cut edge face and a method to apply resin material to the edge face, can be employed so as not to expose fiber reinforced plastics between carbon fibers, carbon-fiber bundles and carbon-fiber fabrics.

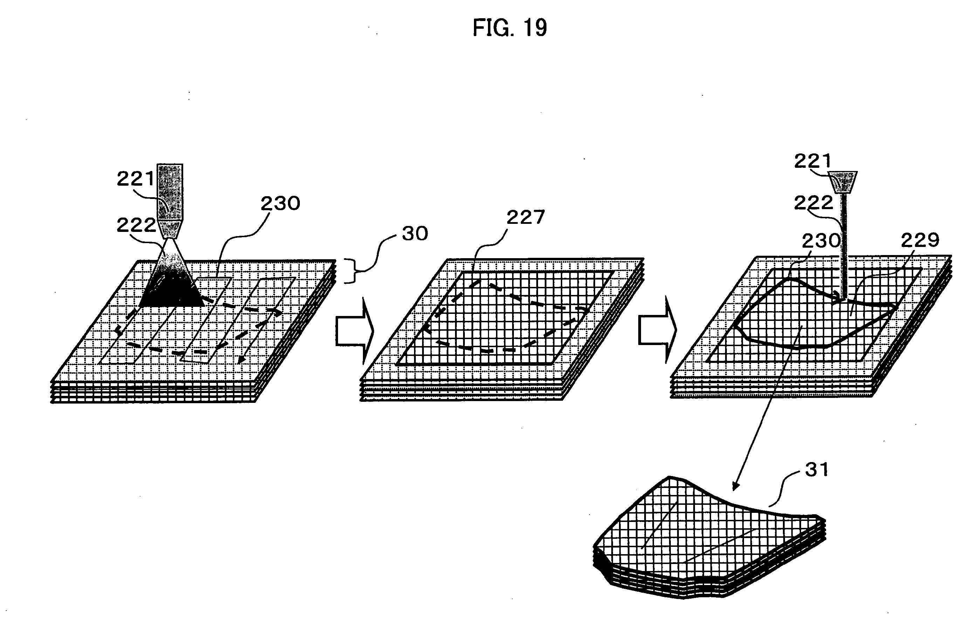

Another case to process a preform desirably with laser beam will be explained with Fig. 19. It is preferable that preform 30 to which laser beam 222 is radiated is made of material, such as carbon fibers, of which elastic modulus and strength are improved by heating. It is preferable that the laser beam radiated to preform 30 is radiated according to scanning profile z0 from the upper side, so as to graphitize carbon fibers composing the surface of preform 30. At this time, it is preferable that the carbon fiber is not overheated enough to be sublimated, cut and bound. It is also preferable that the output is reduced under a predetermined level, that the laser beam is expanded in a line with a prism and that the spot diameter of the laser beam is increased. Specifically, it is preferable that an energy density radiated to a carbon fiber is set less than $1.2*10^{-4}$ (W/$\mu$m$^2$), and is further preferable that the energy density per unit hour, which represents an output radiated to the carbon fiber per unit hour, is set less than $1.2*10^{-4}$ / $(0.1*10^{6}/60)$ = $7.2*10^{-9}$ (W*sec/$\mu$m$^3$), because the processing speed is preferably set more or equal to 0.1m/min. It is preferable that an intensity ratio of G band to D band of the graphitized part of the carbon fiber in a graphitized area 227 is set less or equal to 0.3 under the above-described condition. It is more preferably set less or equal to 0.2.

As to a preform of which surface is made of graphitized carbon fibers, laser beam 222 is replaced with a torch for cutting and is radiated according to scanning profile 230 so as to cut preform to prepare a preform 31 at a product side.

Although an example where the laser beam is radiated to only a side of the preform is shown in Fig. 19, it is more preferable that the laser beam is radiated to both surfaces of the preform to graphitize the carbon fiber. This is similar to an effect of the induction hardening to metal. The fiber reinforced plastics made by impregnating the preform with resin has a structure having a high elastic layer at a position furthest from a neutral axis in the most outer layer, so that the bending rigidity and the surface hardness are efficiently improved. The fiber reinforced plastic product which has been improved in the bending rigidity can achieve additional weight reduction to conventional products.

[Examples]

Hereinafter, desirable embodiments of the present invention will be explained. Besides, the present invention is not limited to the following practical examples.

(Practical example 1)

A carbon-fiber fabric matrix (CK6252: manufactured by Toray Industries, Inc., T700S, 12K, plain weave) as a carbon-fiber fabric obtained by weaving a unidirectional carbon-fiber bundle made of carbon fibers arranged in a single direction was prepared. After a thermoplastic tackifier resin (10g/m$^2$, Tg=70°c, average particle diameter 200$\mu$m) was applied to one surface of the carbon-fiber fabric matrix, the tackifier resin was softened and adhered thereto as running between far-infrared heater plates to prepare a tackifier-adhered carbon-fiber fabric matrix. The tackifier-adhered carbon-fiber fabric matrix was cut to 150mm*150mm with a rotary cutter (manufactured by OLFA company) so as to prepare ten sheets in total.

Next, each tackifier-adhered carbon-fiber fabric matrix was respectively ironed as covering a glass sheet made of Teflon (registered trademark) to soften the tackifier resin and bind it to adjacent tackifier-adhered carbon-fiber fabric matrix. Such a process was continued to prepare a preform made by 10 sheets of layered tackifier-adhered carbon-fiber fabric matrixes.

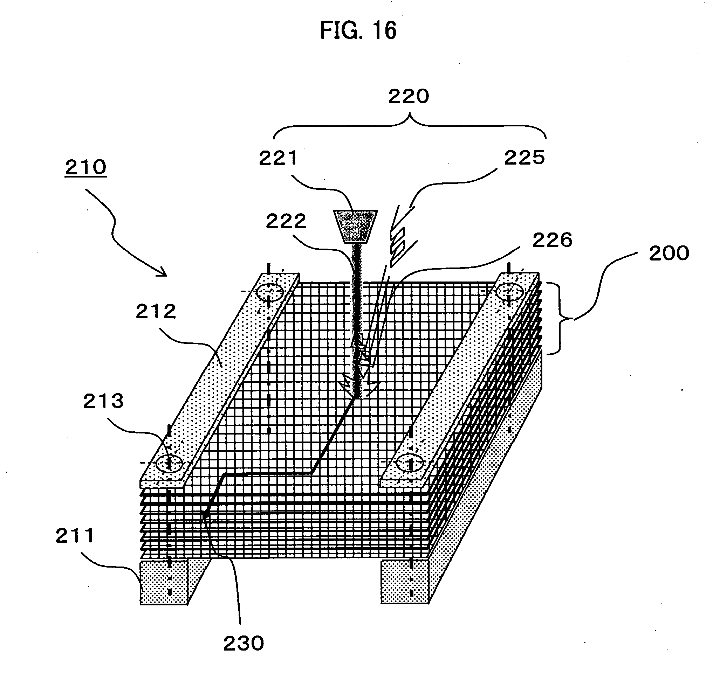

Such a prepared preform was applied to processing test device 210 shown in a schematic diagram in Fig. 16, and the cutting process was performed. Specifically, edge parts of preform 200 were clipped between lower fixing jig 211 and upper fixing jig 212 corresponding to lower fixing jig 211, which were made from a rectangular parallelepiped block (S45C) having about 50mm height. Two sites in total four sites between lower fixing jig 211 and upper fixing jig 212 were fixed with bolts 213 while four insertion holes were bored at the edge parts of preform 20. Cutting processing machine 220 was provided with a disk laser and torch 221 of the disk laser and nitrogen nozzle 225 were mounted on a hand section of a multi-jointed robot (manufactured by Yasukawa Electric, weight capacity 20kg) which is not illustrated. The oscillator of the disk laser was of a semiconductor excitation type as well as an optical fiber transmission type. The cutting condition of cutting processing machine 220 was chosen and adjusted so that the output waveform was CW (Continuous Wave Laser), that the output power was 2000W and that the energy density was 6.4*10$^2$ (W/$\mu$m$^2$) on the surface of the layered carbon-fiber fabric product as for the collimation lens and the collective lens as an optical system, as maintaining the energy density of more or equal to 1.2*10$^{-4}$ (W/$\mu$m$^2$) on the lower surface of preform 200. Laser beam 22 was radiated to preform 200 to perform the cutting process along scanning profile 230 as injecting nitrogen gas 226 from nozzle 225. The processing condition was arranged in Table 1 together with practical examples and comparative examples to be described.

As a result, graphite film 45 having linear mark 41, which is shown in Fig. 3(b), was formed almost all over on the cut edge face of preform 200, and frays of carbon fibers and gaps of cut surfaces were not observed on the edge face. In addition, there was neither cut carbon fibers left nor impurity generation, and the processing speed was a value enough to be satisfied. Such a result can be regarded as good.

Next, a part of graphite film 45 was exfoliated from the edge face of cut preform in practical example 1. Fig. 5 shows a region in which graphite film 45 is attached to and another region from which graphite film is exfoliated and in which graphitized carbon-fiber edge part 48 as shown in Fig. 5 is exposed. In addition to the preform which had been cut in practical example 1, preform A and preform B were prepared by cutting preforms made from carbon fiber A (approximately 800 °C) and carbon fiber B (1500°C), of which a burning temperature of the carbon fibers had been changed. (Besides, charts of preform A and preform B are not shown.) Total three kinds of edge faces, which include these two kinds of edge faces and a carbon-fiber edge part exposed on an edge face of a uncut preform, were subjected to a laser Raman spectroscopy analysis. T-64000 device, manufactured by Horiba Jobin Yvon company, was used for the laser Raman spectroscopy analysis. Analysis conditions are arranged in Table 2.

The result of the laser Raman spectroscopy analysis is shown in Fig. 8 described above. Intensity ratios of G band to D band, of which values have been obtained from five edge faces, are as follows:

Graphite film in practical example 1; average 0.12 (0.07-0.16); average 0.19 (0.17-0.23) for preform A; average 0.12 (0.07-0.14) for preform B.
Graphitized carbon-fiber edge part; average 0.09 (0.09-0.10); average 0.11 (0.10-0.13) for preform A; average 0.08 (0.08-0.09) for preform B.

Carbon-fiber edge part which has not cut with laser beam; average 0.88 (0.86-0.90); 1.38 (1.35-1.42) for preform A; average 0.86 (0.83-0.88) for preform B.

According to such a comparison of the intensity ratios, the graphite film and the graphitized carbon-fiber edge part are further carbonized than the carbon fiber.

(Practical example 2)

A cutting processing test was performed under a condition where the processing atmosphere was changed from nitrogen to the air (nonuse of nozzle 225) in the condition of practical example 1. As a result, graphite film 45 having linear mark 41, which is shown in Fig. 3(b), was formed almost all over on the cut edge face of preform 200, and frays of carbon fibers and gaps of cut surfaces were not observed on the edge face. In addition, there was not cut carbon fibers left, and the processing speed was a value enough to be satisfied. Besides, there was not a adhering impurity, either. Further, considerably good result was obtained in the processing speed, which was greater than that of cutting in practical example 1. On the other hand, ignition occurred slightly. Such a result can be regarded as rather good.

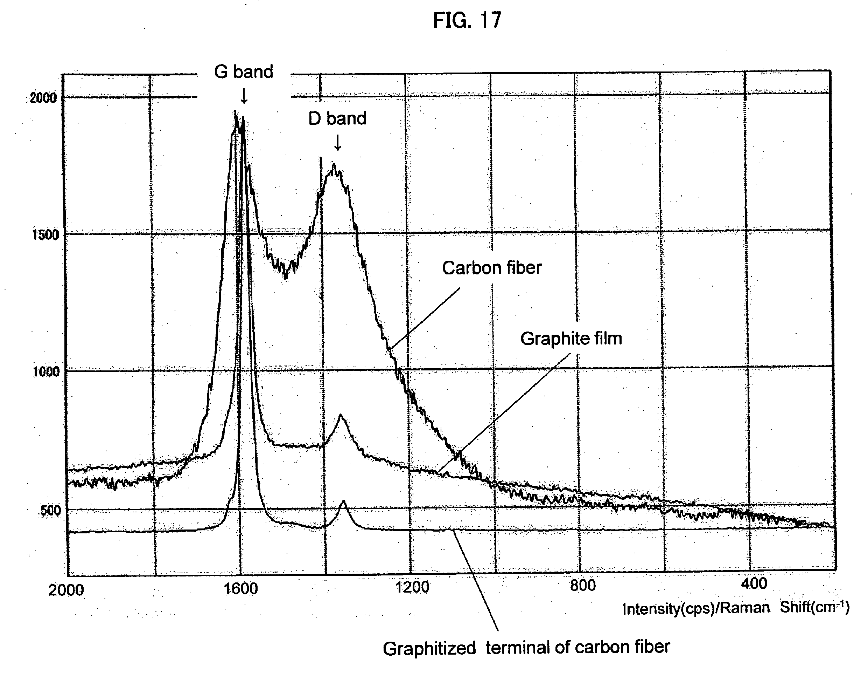

Next, like practical example 1, total three kinds of edge faces, which included a region in which graphite film was attached to a part of graphite film 45 was exfoliated from the edge face of the preform in practical example 1, a region from which graphite film was exfoliated and in which graphitized carbon-fiber edge part was exposed, and a carbon-fiber edge part exposed on an edge face of a uncut preform, were subjected to a laser Raman spectroscopy analysis with the same devices under the same analysis condition of practical example 1. The analytical result of the laser Raman spectroscopy analysis is shown in Fig. 17. The D band value of the graphitized part is found to be higher in comparison to the carbonized carbon-fiber edge part, in practical example 2. That means the intensity ratio became higher, as different from practical example 1. That might be an influence of fluorescence background. In other words, it might be possible that, as different from practical example 1 where the cutting process was performed with laser beam in nitrogen atmosphere, the cutting process in the air caused thermolysis of carbon fibers with oxidation reaction while there existed a component derived from a low molecular weight component, such as polycyclic aromatic compound, in the graphitized part.

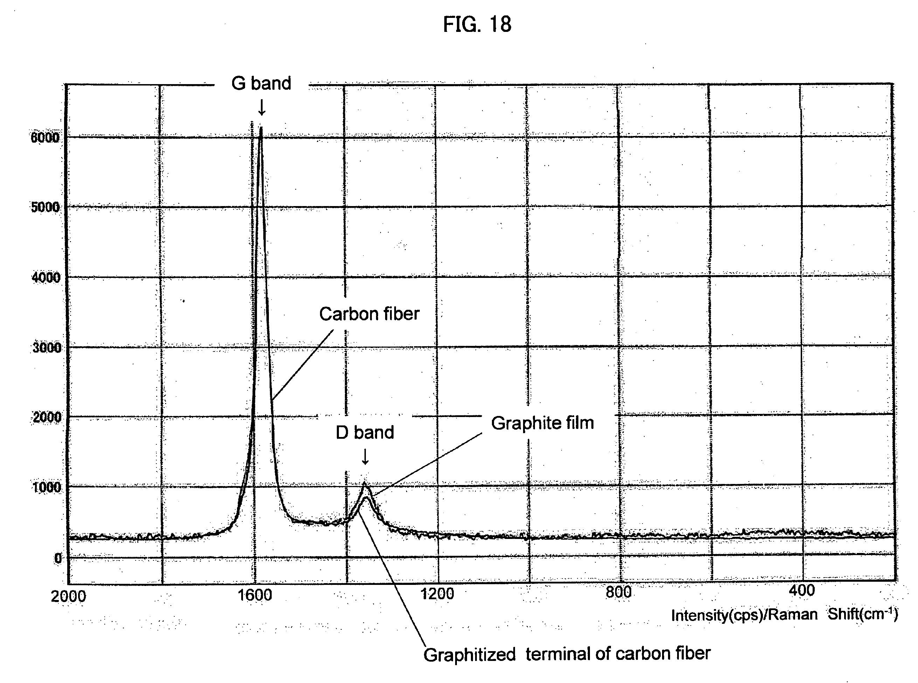

The analytical result which has been subjected to baseline correction in order to remove the influence of the fluorescence background is shown in Fig. 18. By comparing three kinds of edge faces from Fig. 17 of the carbon-fiber edge part uncut with laser beam and from Fig. 18 of the result of the baseline correction, the intensity ratio which is calculated from these intensities of D band and G band are as follows:

Average 0.14 (0.12-0.16) for the graphite film; average 0.07 (0.06-0.08) for the graphitized carbon-fiber edge part; average 0.88 (0.86-0.90) for the carbon-fiber edge part uncut with laser beam.

According to such a comparison of the intensity ratios, the graphitized edge face, as well as the graphite film and the graphitized carbon-fiber edge part like practical example 1, is further carbonized than the carbon fiber. Since the profile shows well the result (Fig. 8) of practical example 1 performed under a condition of nitrogen atmosphere, it seems that a graphitized part, which is similarly carbonized regardless of nitrogen atmosphere and the air, can be prepared by cutting with laser beam.

(Practical example 3)

A cutting processing test was performed under a condition where the processing condition was changed to pulse wave in the condition of practical example 1. As a result, graphite film 45 having linear mark 41, which is shown in Fig. 3(b), was formed almost all over on the cut edge face of preform 200, and frays of carbon fibers and gaps of cut surfaces were not observed on the edge face, as in practical example 1. In addition, there was not cut carbon fibers left, and the processing speed was a value enough to be satisfied. Besides, there was not a adhering impurity, either. Such a result can be regarded as good. The laser Raman spectroscopy analysis will be omitted from practical example 3.

(Practical example 4)

A cutting processing test was performed under a condition where the laser processing machine was changed from disk laser to fiber laser, and the processing condition was changed to the energy density of $6.4*10^{-6}$ (W/$\mu$m$^2$) in the condition of practical example 1. As a result, graphite film 45 having linear mark 41, which is shown in Fig. 3(b), was formed almost all over on the cut edge face of preform 200, and frays of carbon fibers and gaps of cut surfaces were not observed on the edge face. In addition, there was not cut carbon fibers left, and the processing speed was a value enough to be satisfied. Besides, there was not a adhering impurity, either. Such a result can be regarded as good.

(Practical example 5)

A cutting processing test was performed under a condition where carbon-fiber fabric matrix (CO6343: Toray T300, 3K, plain weave) was used as a carbon-fiber fabric for the preform in the condition of practical example 4. As a result, graphite film 45 having linear mark 41, which is shown in Fig. 3(b), was formed almost all over on the cut edge face of preform 200, and frays of carbon fibers and gaps of cut surfaces were not observed on the edge face. In addition, there was not cut carbon fibers left, and the processing speed was a value enough to be satisfied. Besides, there was not a adhering impurity, either. Such a result can be regarded as good.

(Comparative example 1)

A cutting processing test was performed under a condition where the processing condition was changed to the output power of 100W, and the energy density of $3.2*10^5$ (W/$\mu$m$^2$) in the condition of practical example 1, as using the same preform 200 and processing test device 210. As a result, preform 200 was not able to be penetrated with laser beam 70 and some sheets were left uncut.

(Comparative example 2)

After having manufactured the same preform as practical example 1 by using the tackifier-adhered carbon-fiber fabric matrix used in practical example 5, the filler agent which was epoxy type adhesive diluted with an organic solvent for preventing raveling at the cut edge face was applied to the neighborhood of cutting line (not shown) corresponding to the scanning profile in practical example 1. An automatic cutter provided with a round blade was used as the cutting processing machine. The preform was placed on a vacuum table, which is not shown and is covered with a film cover, so as to be vacuumed to fix the preform on the vacuum table while the cutting test was performed. The automatic cutter is a cutter which is generally used in an apparel business and which has a mechanism for running on X- and Y-axis.
Few frays were generated on the cut edge face of the preform by an effect of the filler agent. However, since the filler agent had adhesiveness, single carbon fibers, which seemed to have been fallen off a cut surface of the cut preform, were attached to the surface of the round blade, together with the filler agent. Such a result is not good, because the filler agent might cause impurity adherence to the preform edge face and the carbon fiber might be fallen off and frayed.

(Comparative example 3)

A cutting processing test was performed under a condition where the filler agent was not applied to the neighborhood of the cutting line in the condition of comparative example 2. When the cut preform would be removed from the vacuum table, some carbon fibers were clipped in the vacuum table and the fray was caused on the edge face of the preform. In addition, cut carbon fibers were left at a corner of the preform which had been shaped into a rectangle by cutting. Such a result is not good because, without the filler agent, carbon fibers might be frayed or remain at the time of corner processing.

(Comparative example 4)

The preform manufactured in comparative example 2 was cut by hand work with a round blade (OLFA product) without using a cutting processing machine. The cutting was performed with the round blade of which surface was touching with an edge face of a ruler placed along a cutting line mark, on a cutting mat made of rubber.
The fray was generated on the cut edge face of the preform as shown in Fig. 10 (b). Further, it was cut twice because once was not enough to cut, so that there were many chips of carbon fiber attached to the cut edge face of the preform. Furthermore, the processing speed was very slow because the cutting required very strong power. Such a result is not good because carbon fibers were frayed and the many cut chips were generated.
[Table 1]

| | Practical Example 1 | Practical Example 2 | Practical Example 3 | Practical Example 4 | Practical Example 5 | Comparative Example 1 | Comparative Example 2 | Comparative Example 3 | Comparative Example 4 | Note of Evaluation result |
|---|---|---|---|---|---|---|---|---|---|---|
| Cutting Machine | Disk Laser | Disk Laser | Disk Laser | Fiber Laser | Fiber Laser | Disk Laser | Automatic Cutting Machine (Round Blade) | Automatic Cutting Machine (Round Blade) | Hand Cutting (Round Blade) | |
| Output Waveform | CW | CW | Pulse | CW | CW | CW | | | | |
| Output (W) | 2000 | 2000 | 2000 | 2000 | 2000 | 100 | | | | |
| Energy density (W/μm²) | 8.4E-02 | 8.4E-02 | 8.4E-02 | 8.4E+00 | 8.4E+00 | 1.3E-04 | | | | |
| Atmosphere | Nitrogen | Air | Nitrogen | Nitrogen | Nitrogen | Nitrogen | Air | Air | Air | |
| Carbon-Fiber Fabric | CK6252 | CK6252 | CK6252 | CK6252 | CO6343 | CK6252 | CK6252 Cut part filled | CK6252 | CK6252 | |
| The number of layers | 10 | 10 | 10 | 10 | 10 | 10 | 10 | 10 | 10 | |
| Cutting Easiness | ○ | ○ | ○ | ○ | ○ | × | ○ | △ | △ (Cut twice) | ○: Cut perfectly ×: Cut hardly |
| Processing Speed | A | S | B | A | S | - | S | S | C | S>A>B>C··· |
| Edge Part Fray/ Cut Surface Gap | ○ | ○ | △ | ○ | ○ | - | △ | × | × | ○: With Fray and Gap of Cut Surface ×: Without Fray and Gap of Cut surface |
| Impurity Adhesion | ○ | △ | ○ | ○ | ○ | - | × | ○ | ○ | ○: With Impurity Adhered ×: Without Impurity Adhered |
| Ignition | △ | × | △ | △ | △ | △ | ○ | ○ | ○ | ○: No Ignition ×: Ignitted |

14

[Table 2]

| Device | Name | T-64000 |
|---|---|---|
| | Manufacturer | HORIBA Jobin Yvon |
| Condition | Measurement Mode | Micro-Raman |
| | Field Lens | Field Lens |
| | Beam Diameter | 1 $\mu$m |
| | Cross Slit | 400 $\mu$m |
| | Light Source | Ar + Laser / 514.5 nm |
| | Laser Power | 5 mW |
| | Diffraction Grating | Spectrograph 600 gr/mn |
| | Dispersion | Single 21 A/mm |
| | Slit | 100 $\mu$m |
| | Detector | CCD (Jobin Yvon 1024 x 256) |

Explanation of symbols

1: Carbon fiber
2: edge part (of carbon fiber)
5: unidirectional carbon-fiber bundle
6: edge part (of unidirectional carbon-fiber bundle)
10: carbon-fiber fabric
20: layered carbon-fiber product
21: surface
22: edge face
30: preform
31: preform (product side)
35: blade
36: gap of cut surface
40: graphitized part
41: linear mark
42: binding part
43: salient
45: graphite film
46: film thickness
48: graphitized carbon-fiber edge part
50: fray
61: G band
62: D band
70: laser beam
100: preform positioning process
110: clamping process
111: pressing machine
115: upper die
116: lower die
117: ejector pin
118: O-ring groove
119: O-ring
120: pressurized resin injection process
121: resin injector
122: main agent

123: hardening agent
125: mixer
126: pump
128: vacuum pump
129: suction direction
130: hardening process
140: demolding process
145: fiber reinforced plastic
151: preform
152: carbon-fiber fabric
153: side drop
154: bite
155: fiber reinforced plastic
156: burr
157: edge face
158: crack
159: electric grinder
161: preform
165: fiber reinforced plastic
166: burr
167: edge face
168: crack
171: preform
175: fiber reinforced plastic
176: burr
177: edge face
180: spanner wrench
200: preform
211: fixing jig (lower)
212: fixing jig (upper)
213: bolt
220: cutting processing machine
221: torch
222: laser beam
225: nozzle
226: nitrogen
227: graphitized region
230: scanning profile

## Claims

1. A layered carbon-fiber product, wherein a layered carbon-fiber product obtained by layering one or more sheets of carbon-fiber fabrics each prepared using one or more carbon-fiber bundles each comprising a plurality of carbon fibers arranged in a single direction, **characterized in that**:

   at least a part of a surface and/or an edge face of said layered carbon-fiber product is constituted of a graphitized part and that said graphitized part exhibits a Raman spectrum in which an intensity ratio of a D band to a G band (D-band intensity / G-band intensity) is 0.3 or less.

2. The layered carbon-fiber product according to claim 1, wherein said graphitized part is formed on an edge face of said layered carbon-fiber product.

3. The layered carbon-fiber product according to claim 1 or 2, wherein adjacent carbon fibers are bound to each other in said graphitized part.

4. The layered carbon-fiber product according to claim 3, wherein number of said bound carbon fibers is at least 15.

5.  The layered carbon-fiber product according to any of claims 1-4, wherein said graphitized part is made of a graphite film having a film thickness equal or less than 0.1 mm.

6.  The layered carbon-fiber product according to claim 5, wherein said graphite film has a linear mark on a surface thereof.

7.  said layered carbon-fiber product according to any of claims 1-6, wherein said graphitized part has a graphitized cut edge face which is formed on an edge surface cut by radiating a beam.

8.  The layered carbon-fiber product according to any of claims 1-7, wherein a longitudinal cut surface of said carbon fiber exhibits said Raman spectrum in which an intensity ratio of a D band to a G band (D-band intensity / G-band intensity) is 0.8 or more, and 1.4 or less.

9.  The layered carbon-fiber product according to any of claims 1-8, wherein said carbon fiber includes at least a long fiber of a PAN series carbon fiber.

10. A preform made with a layered carbon-fiber product described in any of claims 1-9, **characterized in that** a binding resin material is laid on a surface of said carbon-fiber fabric and said carbon-fiber fabrics adjacent are bound to each other.

11. A fiber reinforced plastic which is made by impregnating said preform described in claim 10 with a matrix resin to be hardened.

12. A process for producing a layered carbon-fiber product, which is obtained by layering one or more sheets of carbon-fiber fabrics each prepared using one or more carbon-fiber bundles each comprising a plurality of carbon fibers arranged in a single direction, **characterized in that**:

    a surface and/or an edge face of said layered carbon-fiber product is graphitized by radiating a beam to said layered carbon-fiber product.

13. The process for producing a layered carbon-fiber product according to claim 12, wherein said beam is radiated to said layered carbon-fiber product to cut said layered carbon-fiber product into a predetermined shape and a cut surface is graphitized.

14. The process for producing a layered carbon-fiber product according to claim 12 or 13, wherein at least one of an energy density, an operation speed and a depth of focus is controlled in radiating said beam.

15. The process for producing a layered carbon-fiber product according to any of claims 12-14, wherein said beam is any of a spot laser and line laser.

16. A process for producing a preform made with any of said layered carbon-fiber products, **characterized in that** a binding material is laid on a surface of said carbon-fiber fabric and a preform, in which adjacent carbon-fiber fabrics are bound to each other, is graphitized by radiating any of said beams.

FIG. 1

EP 2 514 587 A1

FIG. 2

EP 2 514 587 A1

FIG. 3

(a)

20

40

(b)

41

B

500μm

B' →

(c)

43    42

10μm

FIG. 4

(a)

**5**

1

22(40)

48

(b)

1

45

46

FIG. 5

Graphite film attached region

Graphite film exfoliated region

5

48

250μm

EP 2 514 587 A1

# FIG. 6

(a)

(b)

FIG. 7

(a)

(b)

EP 2 514 587 A1

FIG. 8

EP 2 514 587 A1

FIG. 9

FIG. 10

(a)

21
30
22(40)
22(40)

(b)

30
50
50
50

FIG. 11

EP 2 514 587 A1

FIG. 12

FIG. 13

(a) Pattern 1    115

(b) Pattern 2

(c) Pattern 3

Clamping

Clamping

Clamping

EP 2 514 587 A1

FIG. 14

(a) Pattern 1

155
156

116
117

159
156

(b) Pattern 2

165
166

166

(c) Pattern 3

175
176

176

EP 2 514 587 A1

FIG. 15

(a) Pattern 1       (b) Pattern 2       (c) Pattern 3

EP 2 514 587 A1

FIG. 16

EP 2 514 587 A1

FIG. 17

Graphitized terminal of carbon fiber

FIG. 18

EP 2 514 587 A1

<table>
<tr><td colspan="2" align="center">**INTERNATIONAL SEARCH REPORT**</td><td colspan="2">International application No.<br>PCT/JP2010/071863</td></tr>
</table>

**A. CLASSIFICATION OF SUBJECT MATTER**

*B32B5/26*(2006.01)i, *B29C70/06*(2006.01)i, *B32B5/28*(2006.01)i, *D06H7/22* (2006.01)i

According to International Patent Classification (IPC) or to both national classification and IPC

**B. FIELDS SEARCHED**

Minimum documentation searched (classification system followed by classification symbols)
B32B1/00-43/00, D06H1/00-7/24, D06M10/00-23/18, B29C70/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 46-38619 B1 (Monsanto Co.),<br>13 November 1971 (13.11.1971),<br>column 3, line 20 to column 7, line 4; example 1<br>(Family: none) | 1-5,8-12,<br>14-16 |
| Y | | 6,7,13 |
| Y | JP 6-158528 A (Taisei Corp.),<br>07 June 1994 (07.06.1994),<br>paragraphs [0008] to [0011]; drawings<br>(Family: none) | 6,7,13 |
| A | | 1-5,8-12,<br>14-16 |
| A | JP 2004-514799 A (Carl Freudenberg KG.),<br>20 May 2004 (20.05.2004),<br>claims<br>& US 2004/0029471 A1 & EP 1346091 A<br>& WO 2002/042533 A1 | 1-16 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>19 January, 2011 (19.01.11) | Date of mailing of the international search report<br>01 February, 2011 (01.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/071863

The inventions set forth in claims 1-11 involve all layered carbon-fiber products having the desired property which is "the graphitized part gives a Raman spectrum in which the intensity ratio of the D band to the G band (D-band intensity/G-band intensity) of 0.3 or less". However, the modes which are disclosed in the meaning of PCT Article 5 are limited to the layered carbon-fiber products graphitized with a laser (beam) described in the description. The claims hence lack a support in the meaning of PCT Article 6.

Therefore, a search was made for the range which is supported by and disclosed in the description, i.e., the layered carbon-fiber products graphitized with a laser (beam) specifically described in the description.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004288489 A
- JP 2005297547 A
- JP 2008248457 A
- JP 2008163535 A
- JP 3685364 B

- JP 63074960 A
- JP 10025565 A
- JP 53108089 A
- JP 10045474 A